# DEMANDE DE BREVET EUROPEEN

(11) **EP 4 063 111 A1**
(43) Date de publication de la demande: **28.09.2022**
(21) Numéro de dépôt: 22163292.0
(22) Date de dépôt: 21.03.2022
(51) Int. Cl.: B30B 9/22, B30B 15/26, C12G 1/00

(54) **PRESSOIR, NOTAMMENT POUR UNE APPLICATION DANS LE DOMAINE VITICOLE**

(30) Priorité: 23.03.2021 FR 2102893; 23.03.2021 FR 2102894
(71) Demandeur: Bucher Vaslin, 49290 Chalonnes sur Loire (FR)
(72) Inventeur: MARCHAND, Stéphane, 49290 CHALONNES-SUR-LOIRE (FR); RETAILLEAU, Lionel, 49290 CHALONNES-SUR-LOIRE (FR); DELANOE, Samuel, 49290 CHALONNES-SUR-LOIRE (FR); BLOT, Samuel, 49290 CHALONNES-SUR-LOIRE (FR); BONDUAU, Fabien, 49290 Chalonnes sur Loire (FR)
(74) Mandataire: Ipsilon

(57) **Abrégé**

Pressoir (1) comprenant une cuve (2), un dispositif (19) d'entraînement en rotation de la cuve, un capteur (11) de pression et une unité (10) de commande configurée pour acquérir les données du capteur (11) de pression, ladite cuve (2) délimitant une enceinte (12), cette cuve (2) étant munie d'un orifice (4) de remplissage, d'un orifice (5) de pressurisation et/ou de dépressurisation et d'une membrane (6) de séparation du volume intérieur de la cuve (2) en une chambre (7) de traitement dans laquelle débouche l'orifice (4) de remplissage et une chambre de commande (8) dans laquelle débouche l'orifice (5) de pressurisation et/ou de dépressurisation, ladite cuve (2) comprenant un dispositif (16) de séparation liquide/solide disposé dans la chambre (7) de traitement et configuré pour permettre une communication entre l'intérieur et l'extérieur de la cuve (2).

Le capteur (11) de pression est disposé à l'intérieur de l'enceinte (12) délimitée par la cuve (2).

## Description

La présente invention concerne un pressoir, notamment pour une application dans le domaine viticole.

Elle concerne en particulier un pressoir pour séparer les parties solide et liquide, encore appelée jus, d'une matière telle que de la vendange, ledit pressoir comprenant une cuve, un dispositif d'entraînement en rotation de la cuve autour d'un axe dit longitudinal de la cuve, au moins un capteur de pression et une unité de commande configurée pour acquérir les données du au moins un capteur de pression, ladite cuve délimitant une enceinte, cette cuve étant munie d'au moins un orifice de remplissage de la cuve, d'au moins un orifice de pressurisation et/ou de dépressurisation raccordable à un circuit de fluide sous pression et d'au moins une membrane de séparation de manière étanche du volume intérieur de la cuve en au moins une chambre de traitement dans laquelle débouche le ou au moins l'un des orifices de remplissage de la cuve et une chambre de commande dans laquelle débouche le ou au moins l'un des orifices de pressurisation et/ou de dépressurisation, ladite cuve comprenant en outre au moins un dispositif de séparation liquide/ solide disposé au moins partiellement dans la chambre de traitement et configuré pour permettre une communication entre l'intérieur et l'extérieur de la cuve.

Un tel pressoir est connu comme l'illustre en particulier le brevet FR 2 948 317 du présent demandeur. Un tel pressoir est destiné à permettre le pressage de vendange récoltée manuellement ou de vendange récoltée de manière mécanique. Dans ce cas, la proportion de jus libres peut être comprise entre 20 et 60%. Le principe de fonctionnement d'un tel pressoir est tel que suit : avant de remplir la chambre de traitement en vendange, la ou chaque chambre de commande est mise sous vide et la membrane est plaquée contre une partie des parois de la cuve. Dans une première phase appelée remplissage, on procède au remplissage de la cuve. Ce remplissage peut s'opérer dans un premier temps à l'aide d'orifices de remplissage fermés par des portes et équipant la paroi latérale périphérique de la cuve. Une fois les portes refermées, et la position angulaire de la cuve modifiée par rotation de la cuve pour amener le dispositif de séparation liquide/ solide de la chambre de traitement dans une position dans laquelle il forme le point bas de la cuve, le remplissage peut être poursuivi par un orifice de remplissage axial coaxial à l'axe longitudinal de la cuve grâce à quoi le remplissage de la cuve peut s'opérer à l'état entrainé en rotation de la cuve. Au cours de ce remplissage, le dispositif de séparation liquide/ solide disposé au moins partiellement dans la chambre de traitement et configuré pour permettre une communication entre l'intérieur et l'extérieur de la cuve peut permettre un écoulement des jus libres hors de la cuve, ces jus libres étant collectés dans un récipient de collecte. Au cours de cette phase de remplissage et d'égouttage, les jus libres s'écoulent librement hors de la cuve par la zone de drainage du dispositif de séparation liquide/solide sans nuire au remplissage de la cuve. Lorsque le débit de jus libres devient insuffisant, on alimente en fluide sous pression la ou chaque chambre de commande de sorte que la matière présente dans la chambre de traitement est plaquée contre la zone de drainage du dispositif de séparation liquide/ solide pour faciliter l'évacuation des jus au travers des drains de la zone de drainage du dispositif de séparation liquide/ solide. Cette phase de compression de la vendange par mise sous pression de la ou des chambres de commande est appelée phase de pressurage. En général, on procède à plusieurs phases de pressurage et on sépare chaque phase de pressurage par une phase d'émiettage dans laquelle on dépressurise la chambre de commande et on entraîne en rotation la cuve pour disloquer le gâteau de matière qui se forme sous l'effet de la pression. Dans ce type de pressoir, on est à la recherche permanente de solutions permettant d'optimiser le temps de recueil des jus et la qualité des jus recueillis. Des pressoirs tels que ceux décrits dans les brevets FR2 590 046 et FR 2839 007 sont également connus.

Un but de l'invention est de proposer un pressoir dont la conception permet de manière simple d'optimiser le temps de recueil des jus et la qualité des jus recueillis.

Un autre but de l'invention est de proposer un pressoir dont la conception est simplifiée sans nuire au fonctionnement du pressoir.

A cet effet, l'invention a pour objet un pressoir pour séparer les parties solide et liquide, encore appelée jus, d'une matière telle que de la vendange, ledit pressoir comprenant une cuve, un dispositif d'entraînement en rotation de la cuve autour d'un axe dit longitudinal de la cuve, au moins un capteur de pression et une unité de commande configurée pour acquérir les données du au moins un capteur de pression, ladite cuve délimitant une enceinte, cette cuve étant munie d'au moins un orifice de remplissage de la cuve, d'au moins un orifice de pressurisation et/ou de dépressurisation raccordable à un circuit de fluide sous pression et d'au moins une membrane de séparation de manière étanche du volume intérieur de la cuve en au moins une chambre de traitement dans laquelle débouche le ou au moins l'un des orifices de remplissage de la cuve et une chambre de commande dans laquelle débouche le ou au moins l'un des orifices de pressurisation et/ou de dépressurisation, ladite cuve comprenant en outre au moins un dispositif de séparation liquide/solide disposé au moins partiellement dans la chambre de traitement et configuré pour permettre une communication entre l'intérieur et l'extérieur de la cuve, caractérisé en ce que le ou au moins l'un des capteurs de pression est disposé à l'intérieur de l'enceinte délimitée par la cuve. La présence d'un capteur de pression à l'intérieur de l'enceinte offre un grand nombre d'avantages. Le positionnement du capteur permet une sensibilité élevée de la mesure de pression. La présence de ce capteur permet de détecter de manière fiable une variation de pression à l'intérieur de la chambre de traitement pouvant être révélatrice des prémices d'une surpression ou d'une dépression à l'intérieur de la chambre de traitement. Cette présence permet donc de commander de manière optimisée la rotation de la cuve pour prévenir une surpression à l'intérieur de la chambre de traitement de la cuve ou à l'inverse une dépression à l'intérieur de la chambre de traitement. Cette présence permet donc de limiter l'effet baleine, c'est-à-dire l'expulsion brutale non souhaitée de matière par le dispositif de séparation liquide/solide, ou l'oxydation de la matière contenue dans la chambre de traitement lors d'un entraînement en rotation de la cuve qui serait trop tardif au regard des conditions à l'intérieur de la chambre de traitement ou d'éviter de freiner l'écoulement des jus libres en cas de dépression dans la cuve. Ainsi, il est possible de maitriser parfaitement l'opération de remplissage de la cuve par alimentation axiale de la cuve en parallèle d'un écoulement des jus libres hors de la cuve. En particulier, il est possible de piloter de manière automatique et simple la rotation de la cuve, cette rotation de la cuve étant nécessaire pour décolmater le dispositif de séparation liquide/solide, et mettre à pression atmosphérique la cuve et favoriser l'écoulement des jus libres. Cette rotation ne s'opère que lorsque cela est nécessaire. Il en résulte une moindre trituration et une moindre oxydation de la vendange ainsi qu'un temps d'égouttage réduit. Cette maîtrise du remplissage permet encore d'éviter la présence d'un opérateur qui surveille visuellement le remplissage de la cuve et commande, en fonction de ce qu'il voit, une rotation de la cuve. Cette présence du capteur de pression peut permettre encore, de manière simple, de déterminer le niveau de remplissage de la chambre de traitement.

Selon un mode de réalisation de l'invention, le ou au moins l'un des orifices de remplissage de la cuve est un orifice axial, coaxial à l'axe longitudinal de la cuve, en ce que cet orifice axial forme une interface entre la cuve et une conduite d'alimentation en matière à presser de la cuve équipée d'une pompe et en ce que le ou au moins l'un des capteurs de pression est disposé dans la ou au moins l'une des chambres de traitement. L'orifice axial de remplissage de la cuve, coaxial à l'axe longitudinal de la cuve, permet un remplissage de la cuve à l'état entrainé en rotation de la cuve. L'orifice axial de remplissage de la cuve, coaxial à l'axe longitudinal de la cuve, permet une alimentation en continu de la cuve. Le fait que l'orifice axial forme une interface étanche entre la cuve et une conduite d'alimentation en matière à presser de la cuve équipée d'une pompe permet une alimentation sous pression par pompage de la cuve en matière à presser y compris à l'état entrainé en rotation de la cuve. La présence d'au moins un capteur de pression dans la chambre de traitement permet de contrôler en parallèle avec un seul et même capteur la pression de la cuve résultant du remplissage de la cuve et la pression de la cuve résultant de la vidange de la cuve. Il en résulte une simplification de la conception du pressoir.

Selon un mode de réalisation de l'invention, l'unité de commande est configurée pour commander la pompe équipant la conduite d'alimentation en matière à presser de la cuve en fonction des données fournies par le ou au moins l'un des capteurs de pression qui est disposé dans la ou au moins l'une des chambres de traitement. Ainsi, le fonctionnement de la pompe peut être interrompu en cas de surpression à l'intérieur de la chambre de traitement de la cuve ou être accéléré en cas de vidange rapide de la cuve. Il est ainsi possible de coordonner parfaitement le remplissage et la vidange de la chambre de traitement de la cuve.

Selon un mode de réalisation de l'invention, le ou au moins l'un des capteurs de pression est un capteur flottant.

Selon un mode de réalisation de l'invention, le ou au moins l'un des capteurs de pression est disposé sur la ou au moins l'une des membranes. Il en résulte une facilité de montage du capteur de pression.

Selon un mode de réalisation de l'invention, le ou au moins l'un des capteurs de pression présente une partie active sensible à la pression et ladite partie active est revêtue d'un élément souple de protection venant à recouvrement au moins de ladite partie active. Ainsi, tout risque d'altération de la partie active du capteur de pression par le contenu de la cuve est empêché.

Selon un mode de réalisation de l'invention, la cuve présente, pour la délimitation de l'enceinte, des parois, la ou les chambres de commande sont délimitées chacune au moins partiellement par au moins une partie des parois de la cuve, la ou au moins l'une des membranes est configurée de manière à pouvoir se plaquer contre au moins une partie des parois de la cuve délimitant la ou au moins l'une des chambres de commande à l'état dépressurisé de la chambre de commande, à l'état positionné à l'horizontale de l'axe longitudinal de la cuve correspondant à la configuration d'utilisation, le dispositif de séparation liquide/ solide est positionnable en partie inférieure de la cuve pour former le point bas de la cuve et, en configuration d'utilisation, à l'état dépressurisé de la ou les chambres de commande, et dans une position angulaire de la cuve dans laquelle le dispositif de séparation liquide/solide forme le point bas de la cuve, le ou au moins l'un des capteurs de pression est disposé au-dessus ou dans un plan horizontal contenant l'axe longitudinal de la cuve.

Selon un mode de réalisation de l'invention, l'unité de commande est configurée pour commander le dispositif d'entraînement en rotation de la cuve en fonction des données fournies par le ou au moins l'un des capteurs de pression qui est disposé dans la ou au moins l'une des chambres de traitement. Ainsi, la rotation peut être déclenchée uniquement lorsqu'elle est nécessaire de sorte que le temps d'égouttage est optimisé. Un même capteur de pression peut aider à commander à la fois l'alimentation en matière à presser de la cuve via l'orifice axial de remplissage et l'entrainement en rotation de la cuve.

Selon un mode de réalisation de l'invention, le pressoir comprend un système de détermination de la position angulaire de la cuve et l'unité de commande est configurée pour acquérir des données du système de détermination de la position angulaire de la cuve et pour déterminer le niveau de remplissage de la cuve en fonction des données du au moins un capteur de pression et du système de détermination de la position angulaire de la cuve. Ainsi, il en résulte la possibilité de déterminer de manière simple le niveau de remplissage de la chambre de traitement de la cuve.

Selon un mode de réalisation de l'invention, la cuve qui présente, pour la délimitation de l'enceinte, des parois est une cuve cylindrique avec l'une des parois formant la paroi latérale périphérique de la cuve, et le dispositif de séparation liquide/ solide disposé au moins partiellement dans la chambre de traitement comprend une pluralité de drains s'étendant à l'intérieur de la cuve, le long de ladite paroi latérale périphérique de la cuve, parallèlement à l'axe longitudinal de la cuve.

### Brève description des dessins

L'invention sera bien comprise à la lecture de la description suivante d'exemples de réalisation, en référence aux dessins annexés dans lesquels :
[Fig. 1] représente une vue schématique d'un pressoir conforme à l'invention ;
[Fig. 2] représente une vue schématique partielle en coupe transversale de la cuve du pressoir de la figure 1 avec un capteur de pression fixé à la membrane ;
[Fig. 3] représente une vue schématique partielle en coupe transversale de la cuve du pressoir avec un capteur de pression flottant ;
[Fig. 4] représente une vue schématique d'un capteur de pression ;
[Fig. 5] représente une vue schématique partielle en coupe transversale de la cuve d'un pressoir avec deux membranes de délimitation de la chambre de traitement.

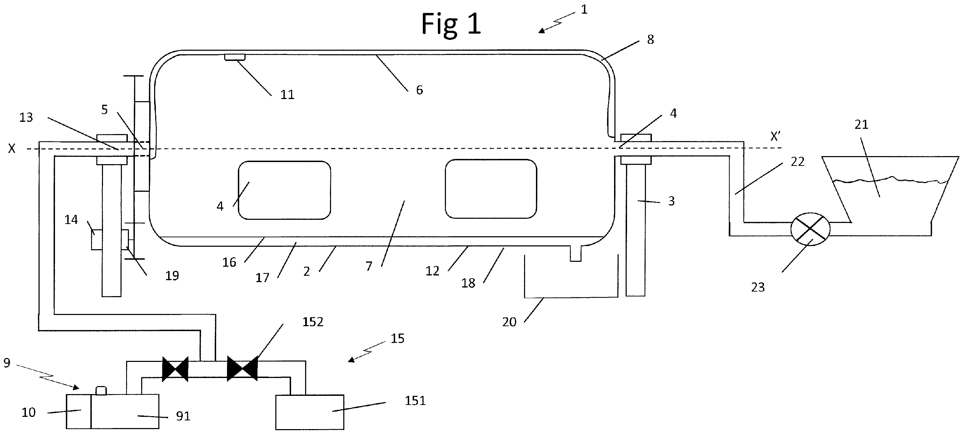

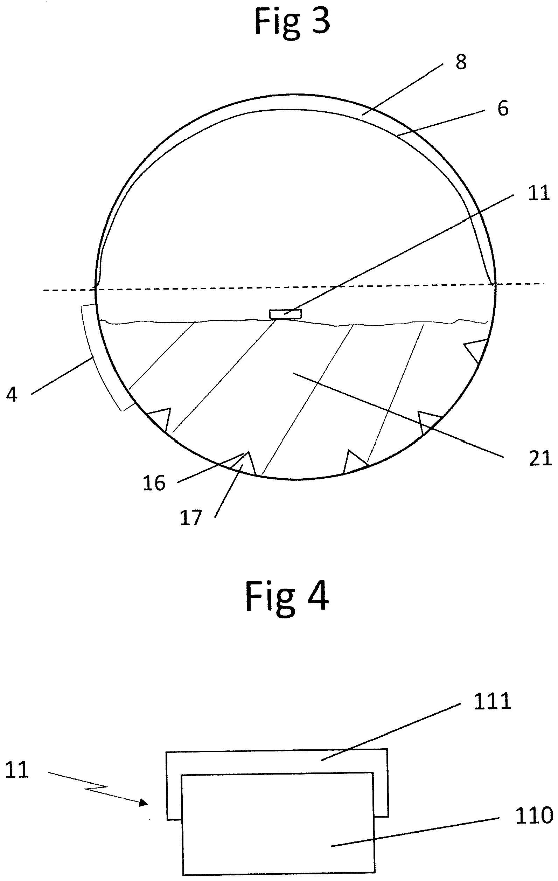

Le pressoir 1, tel qu'illustré aux figures 1 et 3, est un pressoir pneumatique destiné à séparer les parties solides des liquides encore appelés jus d'une matière, telle que de la vendange. Ce pressoir 1 comprend une cuve 2. Cette cuve 2 délimite une enceinte 12. Cette cuve 2 présente, pour la délimitation de l'enceinte 12, des parois 18. Cette cuve 2 est ici une cuve cylindrique à axe horizontal avec l'une des parois formant la paroi latérale périphérique cylindrique et deux parois d'extrémité ou flasques fermant la cuve 2 respectivement à une extrémité et à l'autre extrémité de la paroi latérale périphérique.

Cette cuve 2 est une cuve rotative montée à rotation autour d'un axe dit longitudinal de la cuve 2 représenté en XX' aux figures. Cet axe longitudinal XX' correspond à l'axe longitudinal horizontal du cylindre formé par la cuve 2. Le pressoir 1 comprend un châssis 3 sur lequel la cuve 2 repose. Ce châssis 3 comprend des potelets reposant au sol et sur lesquels la cuve 2 est montée à rotation. Les potelets du châssis 3 supportent ainsi par exemple chacun un palier coopérant avec un tourillon de la cuve disposé au centre de chaque flasque de la cuve 2. Le pressoir 1 comprend encore un dispositif 19 d'entraînement en rotation de la cuve 2 autour de l'axe XX' longitudinal de la cuve 2. Ce dispositif 19 d'entraînement en rotation de la cuve 2 peut comprendre un moteur électrique porté par l'un des potelets. L'arbre rotatif moteur de ce moteur électrique porte un pignon qui s'engrène de manière directe ou indirecte avec une denture de la cuve 2.

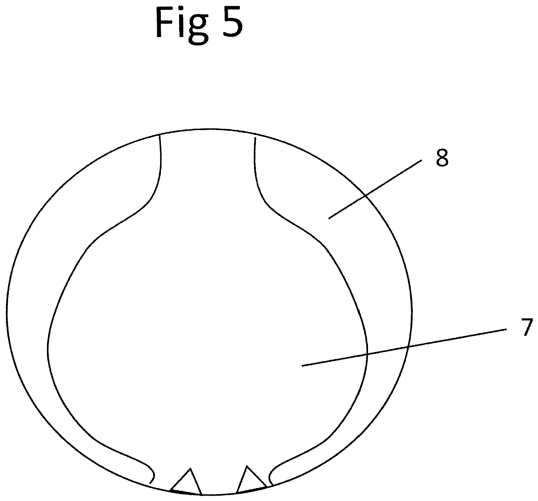

La cuve 2 est munie d'un ou plusieurs orifices 4 de remplissage en matière à presser. A cet effet, le ou au moins l'un des orifices 4 de remplissage est configuré pour permettre une alimentation sous pression de la cuve. Cet orifice 4 de remplissage débouche par exemple de manière étanche dans la cuve et forme le débouché d'un circuit de pompage. Dans l'exemple représenté à la figure 1, plusieurs orifices 4 de remplissage sont prévus. L'un des orifices 4 de remplissage de la cuve 2 est un orifice axial, coaxial à l'axe XX' longitudinal de la cuve. Cet orifice 4 de remplissage est formé par exemple par un orifice axial ménagé sur l'un des flasques de la cuve. C'est cet orifice 4 de remplissage qui est configuré pour permettre une alimentation non pas à pression atmosphérique mais sous pression de la cuve en particulier de la chambre de traitement de la cuve qui sera décrite ci-après. Cette alimentation est une alimentation en matière à presser. Cet orifice 4 de remplissage axial forme une interface entre la cuve 2 et une conduite 22 d'alimentation en matière à presser de la cuve 2 équipée d'une pompe 23. Le fonctionnement de la pompe 23 permet l'alimentation de la au moins une chambre de traitement de la cuve qui sera décrite ci-après. Cette interface est une interface de liaison étanche. Des orifices 4 de remplissage supplémentaires fermés par des portes peuvent être ménagés au niveau de la paroi latérale périphérique de la cuve 2 comme illustré à la figure 1. Ces orifices 4 de remplissage supplémentaires permettent une alimentation du pressoir à pression atmosphérique. Ces orifices 4 de remplissage supplémentaires font également office d'orifice de vidange de la cuve 2. Le flasque opposé à celui équipé de l'orifice 4 de remplissage axial est, quant à lui, équipé d'un orifice de pressurisation axial. Cet orifice de pressurisation est commun avec un orifice de dépressurisation de la cuve 2. Cet orifice de pressurisation et/ou de dépressurisation est représenté par la référence numérique 5 aux figures. A l'intérieur de la cuve 2 est disposée une membrane 6 souple déformable. Dans l'exemple représenté à la figure 1, la membrane 6 est fixée de manière étanche d'une part, à la paroi latérale périphérique de la cuve 2 suivant deux bords longitudinaux opposés, d'autre part, aux flasques suivant deux bords transversaux respectifs. Ces bords transversaux de raccordement de la membrane 6 aux flasques s'étendent, au niveau de l'un des flasques, d'un côté d'un plan longitudinal médian ou diamétral de la cuve passant par l'orifice 4 de remplissage axial de la cuve 2 et l'orifice 5 de pressurisation, et au niveau du flasque opposé, de l'autre côté dudit plan longitudinal médian. La membrane 6 sépare ainsi le volume intérieur de la cuve 2 en deux chambres, à savoir, l'une, dite chambre 7 de traitement dans laquelle débouchent le ou les orifices 4 de remplissage de la cuve 2 et l'autre, dite chambre 8 de commande, dans laquelle débouchent l'orifice 5 de pressurisation et/ou de dépressurisation. Bien évidemment, l'orifice de pressurisation et l'orifice de dépressurisation auraient pu être réalisés de manière distincte. De la même manière, dans l'exemple représenté à la figure 1, la cuve 2 ne comporte que deux chambres mais aurait pu, de manière similaire, comporter une chambre de traitement et par exemple deux chambres de commande disposées de part et d'autre de la chambre de traitement comme illustré à la figure 5 avec deux membranes.

Cette chambre 7 de traitement comprend encore un dispositif 16 de séparation liquide/ solide disposé au moins partiellement dans la chambre 7 de traitement et configuré pour permettre une communication entre l'intérieur et l'extérieur de la cuve 2 et en particulier le drainage des jus contenus dans la cuve 2. Ce dispositif 16 de séparation liquide/solide comprend une pluralité de drains 17 se présentant sous forme de canaux longitudinaux de drainage. Ces drains 17 s'étendent à l'intérieur de la cuve 2 le long de la paroi latérale périphérique de la cuve 2, parallèlement à l'axe XX' longitudinal du cylindre formé par la cuve 2. Ces drains 17 sont en communication fluidique avec des moyens de sortie des jus partiellement représentés. Ces moyens de sortie des jus peuvent comprendre un collecteur du résultat du drainage, ce collecteur comprenant un orifice de sortie positionnable au-dessus et à l'aplomb du réservoir 20 de collecte pour un transfert des jus quittant la cuve par lesdits drains 17 vers ledit réservoir 20 de collecte. En variante ou en complément, des ajourages ménagés sur la paroi latérale périphérique ou un drain recouvrant la périphérie de la cuve auraient pu être envisagés.

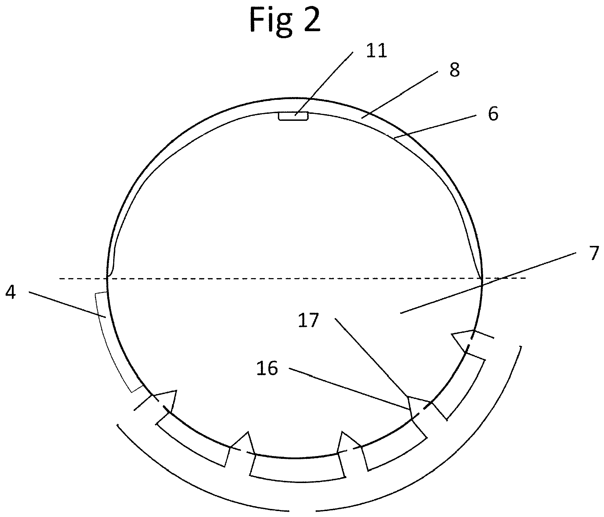

Dans l'exemple illustré aux figures, les canaux de drainage longitudinaux sont formés au moyen d'éléments profilés ajourés sur la face interne de la paroi de la cuve en s'étendant suivant les génératrices de ladite cuve. Ces éléments profilés forment un tamis de filtrage du fait de la présence d'orifices, tels que des trous ou fentes, ménagés dans leur paroi. Le réservoir 20 de collecte peut quant à lui être disposé au moins partiellement sous la cuve 2. A l'état positionné à l'horizontale de l'axe longitudinal de la cuve 2 correspondant à la configuration d'utilisation, le dispositif 16 de séparation liquide/ solide est positionnable en partie inférieure de la cuve pour former le point bas de la cuve. Cette disposition est par exemple représentée à la figure 2 où les drains sont disposés dans la moitié inférieure de la cuve 2 du fait de la position angulaire occupée par la cuve 2.

Le au moins un orifice 5 de pressurisation et/ou de dépressurisation de la cuve 2 est raccordable à un circuit 13 de fluide sous pression sur lequel sont disposés un dispositif 9 pour permettre une alimentation en fluide, en particulier en gaz sous pression, de la chambre 8 de commande et un dispositif 15 de génération de vide. Le dispositif 9 permet l'admission, dans la chambre 8 de commande, de gaz comprimé qui peut être de l'air comprimé, pendant les phases de pressurage. Le dispositif 9, pour permettre l'alimentation en fluide sous pression, comprend, une source 91 de fluide sous pression. La source 91 de fluide sous pression peut être un compresseur, un réseau d'air comprimé ou autre. Cette source 91 de fluide sous pression peut donc être intégrée au pressoir 1 ou indépendante du pressoir 1. Le circuit 13 de fluide sous pression qui relie cette source 91 de fluide sous pression à la chambre de commande peut être obturable.

Le pressoir 1 comprend encore, comme mentionné ci-dessus, un dispositif 15 de génération de vide. Le dispositif 15 de génération de vide comprend un générateur 151 de vide, tel qu'une pompe à vide et un organe 152, tel qu'une électrovanne, d'obturation du circuit 13 de fluide sous pression raccordant l'orifice 5 de dépressurisation de la cuve 2 au générateur 151 de vide. Le passage de l'organe 152 d'obturation d'une position à une autre peut être commandé à l'aide d'une unité 10 de commande qui sera décrite ci-après. Pour permettre un raccordement de la cuve soit à la source 91 de fluide sous pression, soit au générateur 151 de vide, le circuit 13 de fluide sous pression se divise en deux branches menant l'une à la source 91 de fluide sous pression, l'autre, au générateur 151 de vide, comme illustré à la figure 1.

Le dispositif 15 de génération de vide permet l'aspiration de gaz, tel que de l'air comprimé, dans la chambre 8 de commande, en particulier pendant les phases de remplissage, d'émiettage et de vidage de la cuve 2. On comprend que, lorsque la chambre 8 de commande est mise en dépression, la membrane tend à être plaquée contre les parois de la cuve servant à la délimitation de ladite chambre 8 de commande, ce qui permet, au cours du remplissage de la chambre 7 de traitement, d'optimiser le volume disponible de la chambre 7 de traitement. A l'état pressurisé de la chambre 8 de commande, la membrane tend à être plaquée en direction des drains 17 de manière à presser la matière pour en extraire du jus qui s'écoule alors hors de la cuve par les drains 17. La possibilité de mettre en pression et en dépression la chambre 8 de commande permet également d'appliquer à la membrane des mouvements d'aller-retour de la membrane contre la matière à traiter afin de la presser de manière efficace pour en extraire les jus.

Le pressoir comprend, comme mentionné ci-dessus, une unité 10 de commande qui permet un pilotage du dispositif 9 pour permettre une alimentation en gaz sous pression, de la chambre 8 de commande et du dispositif 15 de génération de vide.

L'unité 10 de commande se présente sous la forme d'un système électronique et informatique qui comprend par exemple un microprocesseur et une mémoire de travail. Selon un aspect particulier de l'invention, l'unité 10 de commande peut se présenter sous la forme d'un automate programmable. Autrement dit, les fonctions et étapes décrites peuvent être mises en œuvre sous forme de programme informatique ou via des composants matériels par exemple des réseaux de portes programmables. En particulier, les fonctions et étapes opérées par l'unité de commande ou ces modules peuvent être réalisées par des jeux d'instruction ou module informatique implémenté dans un processeur ou contrôleur, ou être réalisés par des composants électroniques dédiés ou des composants de type FPGA ou ASIC. Il est aussi possible de combiner des parties informatiques et des parties électroniques. Lorsqu'il est précisé que l'unité 10 de commande ou des moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

De manière caractéristique à l'invention, le pressoir 1 comprend au moins un capteur 11 de pression disposé à l'intérieur de l'enceinte 12 délimitée par la cuve, en particulier par les parois de la cuve 2.

L'unité 10 de commande est configurée pour acquérir les données du au moins un capteur 11 de pression, et pour commander au moins le dispositif 19 d'entraînement en rotation de la cuve en fonction desdites données. Bien qu'un ou des capteurs 11 de pression puissent être disposés dans la ou les chambres 8 de commande, de préférence pour accroître la sensibilité, et détecter à la fois une dépression et une surpression de la cuve 2 au niveau de la ou les chambres 7 de traitement, le ou au moins l'un des capteurs 11 de pression est disposé dans la ou au moins l'une des chambres 7 de traitement. Ce capteur 11 de pression peut être conforme à celui représenté à la figure 4.

Ainsi, ce capteur 11 de pression présente une partie 110 active sensible à la pression et ladite partie 110 active est revêtue d'un élément 111 souple, tel qu'une membrane de protection, venant à recouvrement au moins de ladite partie 110 active.

Ce ou au moins l'un des capteurs 11 de pression peut être disposé sur la ou au moins l'une des membranes 6 côté face de la membrane servant à la délimitation de la chambre 7 de traitement. En variante, ou en complément, ce capteur 11 de pression peut être un capteur flottant disposé dans la chambre de traitement et venant flotter à la surface de la vendange à presser. En variante ou en complément, le capteur 11 de pression peut être disposé au niveau ou à proximité de la zone de raccordement de la membrane à la cuve.

Indépendamment de la conception du capteur 11 de pression, en configuration d'utilisation, à l'état dépressurisé de la ou les chambres 8 de commande et, dans une position angulaire de la cuve 2 dans laquelle le dispositif 16 de séparation liquide/solide forme le point bas de la cuve 2, au moins le ou au moins l'un des capteurs 11 de pression est disposé dans ou au-dessus d'un plan horizontal contenant l'axe XX' longitudinal de la cuve 2. En variante et /ou en complément le ou au moins l'un des capteurs 11 de pression peut être disposé dans la chambre de traitement au niveau du dispositif 16 de séparation liquide/solide. Dans ce cas, en configuration d'utilisation, à l'état dépressurisé de la ou les chambres 8 de commande et, dans une position angulaire de la cuve 2 dans laquelle le dispositif 16 de séparation liquide/solide forme le point bas de la cuve 2, au moins le ou au moins l'un des capteurs 11 de pression est disposé au-dessous d'un plan horizontal contenant l'axe XX' longitudinal de la cuve 2.

Comme mentionné ci-dessus, l'unité 10 de commande est configurée pour commander le dispositif 19 d'entraînement en rotation de la cuve 2 en fonction des données fournies par le au moins l'un des capteurs 11 de pression.

L'unité 10 de commande est configurée pour commander la pompe 23 équipant la conduite 24 d'alimentation en matière à presser de la cuve 2 en fonction des données fournies par le ou au moins l'un des capteurs 11 de pression qui est disposé dans la ou au moins l'une des chambres 7 de traitement.

Le pressoir 1 comprend encore un système 14 de détermination de la position angulaire de la cuve 2 et l'unité 10 de commande est configurée pour acquérir des données du système 14 de détermination de la position angulaire de la cuve 2 et pour déterminer le niveau de remplissage de la cuve 2 en fonction des données du au moins un capteur 11 de pression et du système 14 de détermination de la position angulaire de la cuve 2.

Le système 14 de détermination de la position angulaire de la cuve 2 peut affecter un grand nombre de formes. Dans l'exemple représenté, le système 14 de détermination de la position angulaire est un codeur disposé au niveau de l'arbre moteur du dispositif 19 d'entraînement en rotation de la cuve 2.

En variante, le système 14 de détermination de la position angulaire de la cuve 2 peut comprendre un capteur de présence disposé sur le châssis du pressoir 1 et des repères détectables par le capteur de présence disposés sur la cuve ou l'inverse.

En variante ou en complément, le système 14 de détermination de la position angulaire de la cuve peut comprendre une horloge qui détermine, en lien avec l'unité 10 de commande en fonction du temps de rotation à vitesse constante de la cuve 2, la position angulaire de la cuve 2.

En pratique, le fonctionnement d'un pressoir 1, tel que décrit ci-dessus, est tel que suit.

Avant de remplir la chambre 7 de traitement en matière, telle que de la vendange, on aspire, à l'aide du dispositif 15 de génération de vide, par l'orifice 5 de pressurisation équipant la chambre 8 de commande, l'air ou tout autre agent de pression équivalent hors de la chambre 8 de commande de la cuve 2, de sorte que le vide s'y produit et que la membrane 6 se plaque contre les parties de paroi de la cuve servant à la délimitation de ladite chambre 8 de commande.

Le dispositif 15 de génération de vide est piloté par l'unité 10 de commande à l'aide d'un capteur de mesure d'un paramètre représentatif de la pression disposé soit à l'intérieur de l'enceinte de la cuve dans la ou l'une des chambres 8 de commande, soit au niveau du circuit 13 de fluide sous pression raccordant le dispositif 15 de génération du vide à la cuve 2.

Le remplissage de la cuve du pressoir avec la matière à presser peut s'opérer à l'arrêt de la cuve par la ou les portes dont est équipée la chambre de traitement. Toutefois, le remplissage de la cuve s'opère principalement par l'orifice 4 de remplissage axial avantageusement équipé d'un raccord tournant pour permettre un remplissage pendant la rotation de la cuve 2.

Ce remplissage s'opère donc à l'état fermé des portes de la cuve et de manière telle qu'une surpression peut être constatée dans la chambre 7 de traitement lorsqu'un colmatage s'opère au niveau du dispositif 16 de séparation liquide/solide ou lorsque le débit d'évacuation devient inférieur au débit d'alimentation.

Dans cette position de remplissage, la cuve 2 occupe une position dans laquelle les drains 17 sont disposés dans la partie inférieure de la cuve 2, en regard du réservoir 20 de collecte du liquide contenu dans la matière disposé au moins partiellement sous la cuve.

Pour éviter une surpression de la chambre 7 de traitement résultant, par exemple, d'un colmatage du dispositif 16 de séparation liquide/soluble ou à l'inverse une dépression de la chambre 7 de traitement résultant d'un écoulement trop rapide des jus libres au regard du remplissage de la chambre 7 de traitement et, pour ne pas avoir à multiplier le nombre de rotations de la cuve, rotation qui nuit à la qualité des jus produits ou qui génère une trituration et une oxydation plus importantes de la vendange ainsi que des jus plus bourbeux, on mesure à l'aide du ou des capteurs 11 de pression la pression régnant dans la chambre 7 de traitement, et l'unité 10 de commande ne commande la rotation de la cuve que lorsque les valeurs de pression mesurées sont critiques, c'est-à-dire correspondent à des valeurs de pression qui indiquent une surpression ou une dépression à l'intérieur de la chambre 7 de traitement. De même, l'unité 10 de commande commande la pompe 23 pour un remplissage de la cuve en matière à presser à travers l'orifice axial de remplissage en fonction des données du ou des capteurs 11 de pression disposés dans la chambre de traitement et ne commande le fonctionnement de la pompe que lorsque les valeurs de pression mesurées ne sont pas critiques, c'est-à-dire ne correspondant pas à une surpression dans la chambre 7 de traitement.

A cet effet, une plage de valeurs de pression de consigne peut être mémorisée et l'unité 10 de commande peut comparer cette plage de valeurs de pression de consigne par rapport à la valeur de pression mesurée.

Au cours de la rotation de la cuve, l'unité 10 de commande est apte à déterminer, à partir des données fournies par le système 14 de détermination de la position angulaire de la cuve 2 et des données du capteur 11 de pression, le niveau de remplissage de la cuve 2. Ainsi, par exemple, si une rotation est déclenchée en raison d'une surpression de la chambre 7 de traitement, il suffit à l'unité de commande de déterminer dans quelle position angulaire de la cuve 2 cette surpression cesse pour déterminer le niveau de remplissage de la cuve 2. Cette information permet également à l'unité 10 de commande de commander la pompe 23 d'alimentation en vendange de l'orifice 4 de remplissage.

Ces différents pilotages autorisent donc une limitation du nombre de rotations de la cuve tout en permettant un remplissage pendant la rotation de la cuve 2.

Au cours de cette phase de remplissage et d'égouttage, l'écoulement des jus s'opère de manière libre à pression atmosphérique. Une fois cet écoulement libre des jus achevé, la phase de pressurage peut commencer. On suppose qu'une ou plusieurs pressions de consigne ont été mémorisées ainsi que des périodes de temps correspondant au maintien de ladite pression de consigne à l'intérieur de la ou les chambres de commande. On actionne alors le dispositif 9 d'alimentation en fluide sous pression.

Sous l'effet de cette alimentation en fluide sous pression de la chambre 8 de commande, la membrane 6 est pressée contre la matière présente dans la chambre 7 de traitement qui est elle-même mise sous pression contre les drains 17. Il en résulte que la partie liquide de cette matière s'écoule au travers des drains 17 tandis que la partie solide reste dans la cuve en dehors desdits drains 17.

Au cours de cette alimentation en fluide sous pression de la chambre 8 de commande, on compare la pression du capteur 11 de pression de la chambre 7 de traitement et la pression du capteur de la chambre 8 de commande, lorsqu'il est présent, avec la pression de consigne mémorisée. Lorsque la pression mesurée par l'un ou l'autre des capteurs est égale à la pression de consigne, on cesse l'alimentation en pression de la chambre 8 de commande et on maintient en l'état, pendant une période de temps prédéterminée, correspondant à la période de temps mémorisée.

Un test permet de déterminer si la période de temps prédéterminée est écoulée. Lorsque cette période de temps est achevée, on procède, à la mise sous vide de la chambre 8 de commande au cours de laquelle on écarte la membrane 6 des drains 17 puis à une phase d'émiettage au cours de laquelle on fait tourner la cuve 2 autour de son axe pour disloquer le gâteau de matière qui se forme sous l'effet de la pression. Une nouvelle phase de pressurage peut alors être engagée.

Les inventeurs ont constaté que, grâce à cette commande de l'admission en fluide sous pression de la chambre 8 de commande en fonction de la pression régnant dans la chambre de traitement, comme la pression régnant dans la chambre de traitement est généralement inférieure à celle régnant dans la chambre de commande, une quantité importante de jus peut être extraite à une pression dite faible par comparaison à un pilotage du pressurage à l'aide de la pression régnant dans la chambre de commande. Il en résulte à nouveau une qualité améliorée des jus.

Une fois la phase de pressurage achevée, la chambre de commande est à nouveau mise sous vide pour permettre à un opérateur d'enlever la matière solide restant dans la cuve. Pour vider la cuve, une fois le pressurage effectué, on ouvre la ou les portes équipant la paroi latérale périphérique de la cuve et on fait tourner la cuve de sorte que la partie solide restant dans la chambre de traitement s'évacue progressivement au travers de l'ouverture démasquée par la porte. L'opérateur peut alors nettoyer la membrane en faisant passer un jet d'eau à travers l'ouverture latérale ménagée dans le corps de cylindre côté chambre de traitement pour nettoyer la membrane plaquée contre la paroi de la chambre de commande.

## Revendications

1. Pressoir (1) pour séparer les parties solide et liquide, encore appelée jus, d'une matière telle que de la vendange, ledit pressoir (1) comprenant une cuve (2), un dispositif (19) d'entraînement en rotation de la cuve autour d'un axe (XX') dit longitudinal de la cuve (2), au moins un capteur (11) de pression et une unité (10) de commande configurée pour acquérir les données du au moins un capteur (11) de pression, ladite cuve (2) délimitant une enceinte (12), cette cuve (2) étant munie d'au moins un orifice (4) de remplissage de la cuve (2), d'au moins un orifice (5) de pressurisation et/ou de dépressurisation raccordable à un circuit (13) de fluide sous pression et d'au moins une membrane (6) de séparation de manière étanche du volume intérieur de la cuve (2) en au moins une chambre (7) de traitement dans laquelle débouche le ou au moins l'un des orifices (4) de remplissage de la cuve (2) et une chambre de commande (8) dans laquelle débouche le ou au moins l'un des orifices (5) de pressurisation et/ou de dépressurisation, ladite cuve (2) comprenant en outre au moins un dispositif (16) de séparation liquide/ solide disposé au moins partiellement dans la chambre (7) de traitement et configuré pour permettre une communication entre l'intérieur et l'extérieur de la cuve (2), **caractérisé en ce que** le ou au moins l'un des capteurs (11) de pression est disposé à l'intérieur de l'enceinte (12) délimitée par la cuve (2).

2. Pressoir (1) selon la revendication 1, **caractérisé en ce que** le ou au moins l'un des orifices (4) de remplissage de la cuve (2) est un orifice axial, coaxial à l'axe (XX') longitudinal de la cuve (2), **en ce que** cet orifice (4) axial forme une interface entre la cuve (2) et une conduite (22) d'alimentation en matière à presser de la cuve (2) équipée d'une pompe (23) et **en ce que** le ou au moins l'un des capteurs (11) de pression est disposé dans la ou au moins l'une des chambres (7) de traitement.

3. Pressoir (1) selon la revendication 2 , **caractérisé en ce que** l'unité (10) de commande est configurée pour commander la pompe (23) équipant la conduite (24) d'alimentation en matière à presser de la cuve (2) en fonction des données fournies par le ou au moins l'un des capteurs (11) de pression qui est disposé dans la ou au moins l'une des chambres (7) de traitement.

4. Pressoir (1) selon l'une des revendications 1 à 3, **caractérisé en ce que** le ou au moins l'un des capteurs (11) de pression, qui est disposé dans la ou au moins l'une des chambres (7) de traitement, est un capteur flottant.

5. Pressoir (1) selon l'une des revendications 1 à 4, **caractérisé en ce que** le ou au moins l'un des capteurs (11) de pression est disposé sur la ou au moins l'une des membranes (6).

6. Pressoir (1) selon l'une des revendications 1 à 5, **caractérisé en ce que** le ou au moins l'un des capteurs (11) de pression présente une partie (110) active sensible à la pression et **en ce que** ladite partie (110) active est revêtue d'un élément (111) souple de protection venant à recouvrement au moins de ladite partie (110) active.

7. Pressoir (1) selon l'une des revendications 1 à 6, **caractérisé en ce que** la cuve (2) présente, pour la délimitation de l'enceinte (12), des parois (18), **en ce que** la ou les chambres (8) de commande sont délimitées chacune au moins partiellement par au moins une partie des parois (18) de la cuve (2), **en ce que** la ou au moins l'une des membranes (6) est configurée de manière à pouvoir se plaquer contre au moins une partie des parois (18) de la cuve (2) délimitant la ou au moins l'une des chambres (8) de commande à l'état dépressurisé de la chambre (8) de commande, **en ce que** à l'état positionné à l'horizontale de l'axe (XX') longitudinal de la cuve (2) correspondant à la configuration d'utilisation, le dispositif (16) de séparation liquide/ solide est positionnable en partie inférieure de la cuve (2) pour former le point bas de la cuve (2) et **en ce que**, en configuration d'utilisation, à l'état dépressurisé de la ou les chambres (8) de commande, et dans une position angulaire de la cuve (2) dans laquelle le dispositif (16) de séparation liquide/solide forme le point bas de la cuve (2), le ou au moins l'un des capteurs (11) de pression est disposé au-dessus ou dans un plan horizontal contenant l'axe (XX') longitudinal de la cuve (2).

8. Pressoir (1) selon l'une des revendications 1 à 7, **caractérisé en ce que** l'unité (10) de commande est configurée pour commander le dispositif (19) d'entraînement en rotation de la cuve (2) en fonction des données fournies par le ou au moins l'un des capteurs (11) de pression qui est disposé dans la ou au moins l'une des chambres (7) de traitement.

9. Pressoir (1) selon l'une des revendications 1 à 8, **caractérisé en ce qu'**il comprend un système (14) de détermination de la position angulaire de la cuve (2) et **en ce que** l'unité (10) de commande est configurée pour acquérir des données du système (14) de détermination de la position angulaire de la cuve (2) et pour déterminer le niveau de remplissage de la cuve (2) en fonction des données du au moins un capteur (11) de pression et du système (14) de détermination de la position angulaire de la cuve (2).

10. Pressoir (1) selon l'une des revendications 1 à 9, **caractérisé en ce que** la cuve (2) qui présente, pour la délimitation de l'enceinte (12), des parois (18) est une cuve (2) cylindrique avec l'une des parois (18) formant la paroi latérale périphérique de la cuve (2), et **en ce que** le dispositif (16) de séparation liquide/solide disposé au moins partiellement dans la chambre (7) de traitement comprend une pluralité de drains (17) s'étendant à l'intérieur de la cuve (2), le long de ladite paroi latérale périphérique de la cuve (2), parallèlement à l'axe (XX') longitudinal de la cuve (2).
